# EUROPÄISCHE PATENTANMELDUNG

(11) **EP 3 567 351 A1**
(43) Veröffentlichungstag der Anmeldung: **13.11.2019**
(21) Anmeldenummer: 18171296.9
(22) Anmeldetag: 08.05.2018
(51) Int. Cl.: G01G 19/02, G08G 1/042

(54) **WIM SENSOR MIT MAGNETFELDSENSOREN**

(71) Anmelder: Kistler Holding AG, 8408 Winterthur (CH)
(72) Erfinder: Minkoley, Dennis, 8408 Winterthur (CH); Schneider, Damian, 8406 Winterthur (CH); Ruinelli, George, 8620 Wetzikon (CH)

(57) **Zusammenfassung**

Die Erfindung betrifft ein WIM Sensor (2) zur Ermittlung einer Last eines Fahrzeugs (12a bis 12c) auf einem Fahrbahnabschnitt (1) bei der Überfahrt eines Rads (13) des Fahrzeugs (12a bis 12c) über den WIM Sensor (2); welcher WIM Sensor (2) im Fahrbahnabschnitt (1) in der Fahrbahn (10) angeordnet ist; welcher WIM Sensor (2) als ein Profil (21) mit mindestens einem Raum (22) ausgeführt ist; in welchem Raum (22) mindestens ein Kraftaufnehmer (25) angeordnet ist; welcher Kraftaufnehmer (25) ein Kraftaufnehmersignal (50) erzeugt; welches Kraftaufnehmersignal (50) einer dynamischen Bodenreaktionskraft bei Überfahrt des Rads (13) entspricht, welches Rad (13) eine Radlast (95) auf die Fahrbahn (10) ausübt; wobei im Raum (22) mindestens ein Magnetfeldsensor (26) angeordnet ist; und wobei der Magnetfeldsensor (26) eine Magnetfeldstärke eines Magnetfeldes misst und als Magnetfeldsensorsignal (60) bereitstellt.

## Beschreibung

### Technisches Gebiet

Die Erfindung betrifft einen WIM Sensor mit mindestens einem im WIM Sensor angeordneten Magnetfeldsensor und ein WIM System bestehend aus mindestens zwei solcher WIM Sensoren gemäss der Definition der Oberbegriffe der unabhängigen Ansprüche.

### Stand der Technik

Die heutige Weigh-in-Motion Technologie wird überwiegend in der statistischen Erhebung von Fahrzeugdaten oder dem Vorselektieren von Fahrzeugen aus fliessendem Verkehr, welche anschliessend mit einer statischen Waage überprüft werden, eingesetzt. Der Verkehrsfluss muss meist über die WIM-Installation geführt werden, z.B. im Bereich von Mautstellen mit abgegrenzten Fahrspuren oder auf einspurigen Überlandstrassen. Auf Autobahnen mit mehreren Fahrspuren werden meist nur die Spuren für langsameren Verkehr abgedeckt, auf denen Schwerlastverkehr fährt. Anwendungen bei denen direkte Zahlungen basierend auf der WIM Messung ausgelöst werden sind selten, da sie eine erhöhte Anforderung an die Genauigkeit der Fahrzeugerkennung stellen und dadurch mit zusätzlichen technischen Lösungen aufwendig sind.

Die heutigen WIM-Systeme sind nicht in der Lage Spurwechsel oder zwischen zwei Spuren fahrende Fahrzeuge präzise zu erfassen. Die Erkennung der Präsenz eines Fahrzeugs wird üblicherweise mit Induktionsschlaufen realisiert, welche bezüglich der vorgegebenen Fahrspurrichtung der Fahrspur vor und/oder hinter einem WIM Sensor in der Fahrbahn einbracht sind. Eine Induktionsschlaufe deckt dabei genau eine Fahrspur ab und erfasst die Präsenz eines Fahrzeugs an der Position der Schlaufe. Befinden sich zeitgleich mehrere Fahrzeuge auf einer Fahrspur oder wechselt ein Fahrzeug die Fahrspur während der Überfahrt, so kommt es zu Detektionsfehlern.

Aus US2014309966A ist ein WIM System bekannt; mit einem Verfahren zur Bestimmung der Gesamtlast eines Fahrzeugs während der Fahrt auf einem Fahrbahnabschnitt einer Fahrbahn durch ein WIM System; wobei während der Überfahrt des Fahrzeugs in diesem Fahrbahnabschnitt sowohl Radlasten aller Räder als auch Geschwindigkeit des Fahrzeugs während der gesamten Überfahrt erfasst werden; wobei die Radlasten durch einen oder mehrere WIM Sensoren erfasst werden; wobei die Geschwindigkeit des Fahrzeugs durch zusätzliche Sensoren wie Radar, ein in Fahrtrichtung angeordneter Array von Strahlen, oder mittels Laser Doppler Velocimetry Verfahren erfasst wird; wobei die Zuordnung von erfassten Radlasten zu einem Fahrzeug mit Hilfe einer Vorrichtung zum Ermitteln des Endes des Fahrzeugs, welches einen Fahrbahnabschnitt überfährt, geschieht; wobei genannte Vorrichtung ein Strahlengitter sein kann, das quer zur Fahrbahn errichtet wird, oder wobei genannte Vorrichtung Induktionsschlaufen sein können, welche in der Fahrbahn eingebaut sind; wobei aus der Summe aller zu einem Fahrzeug gehörenden Radlasten die Gesamtlast des Fahrzeugs bestimmt werden kann.

Nachteilig ist hierbei, dass die zur Bestimmung der Gesamtlast eines Fahrzeugs nötige Bestimmung des Endes einer Präsenz des Fahrzeugs über einem WIM Sensor zusätzliche separate Sensoren in, neben oder über der Fahrbahn erfordert, deren Installation eine längere Sperrung eines Fahrbahnabschnitts und höhere Kosten bezüglich Installation und Wartung des WIM Systems verursachen.

Ein weiterer Nachteil besteht in der Ermittlung des Endes des Fahrzeugs durch ein Strahlengitter oder durch Induktionsschlaufen. So ist ein Strahlengitter nicht geeignet um den Anfang und das Ende von mehreren Fahrzeugen zu erfassen, welche auf unterschiedlichen Fahrspuren einer Fahrbahn fahren. Induktionsschlaufen sind nicht geeignet um Fahrzeuge zu erfassen, welche zwischen zwei Fahrspuren fahren oder die Fahrspur wechseln. Zudem schwächen in der Fahrbahn eingebrachte Induktionsschlaufen die Integrität der Fahrbahn und stellen eine Gefahr für die Haltbarkeit der Fahrbahn dar.

Aufgabe der vorliegenden Erfindung ist es, die Präsenz eines Fahrzeugs über einem WIM Sensor durch eine Vorrichtung innerhalb des WIM Sensors zu ermitteln, um eine Kosteneinsparung durch Wegfall der zusätzlichen Installationen eines Strahlengitters oder einer Induktionsschlaufe und der zur Auswertung und Steuerung von Strahlengitter oder Induktionsschlaufen notwendige Elektronik zu erreichen.

Eine weitere Aufgabe der Erfindung ist es einen WIM Sensor bereitzustellen, der in einer Anordnung aus mindestens zwei WIM Sensoren nutzbar ist, um eine oder mehrere Fahrspuren einer Fahrbahn über die gesamte Fahrbahnbreite abzudecken und die Präsenz und die Position eines Fahrzeugs auf der Fahrbahn unabhängig von einer Fahrspur zu erkennen. Aufwendige bauliche oder organisatorische Massnahmen werden vermieden, mit welchen Fahrzeuge zum Verbleib auf einer Fahrspur gezwungen werden.

### Darstellung der Erfindung

Zumindest eine dieser Aufgaben wird durch die Merkmale der unabhängigen Ansprüche gelöst.

Die Erfindung betrifft einen WIM Sensor zur Ermittlung einer Last eines Fahrzeugs auf einem Fahrbahnabschnitt bei der Überfahrt eines Rads des Fahrzeugs über den WIM Sensor; welcher WIM Sensor im Fahrbahnabschnitt in der Fahrbahn angeordnet ist; welcher WIM Sensor als ein Profil mit mindestens einem Raum ausgeführt ist; in welchem Raum mindestens ein Kraftaufnehmer angeordnet ist; welcher Kraftaufnehmer ein Kraftaufnehmersignal erzeugt; welches Kraftaufnehmersignal einer dynamischen Bodenreaktionskraft bei Überfahrt des Rads entspricht, welches Rad eine Radlast auf die Fahrbahn ausübt; wobei im Raum mindestens ein Magnetfeldsensor angeordnet ist; und wobei der Magnetfeldsensor eine Magnetfeldstärke eines Magnetfeldes misst und als Magnetfeldsensorsignal bereitstellt.

Fahrzeuge sind zumindest teilweise aus Materialien gefertigt, welche ein bestehendes Magnetfeld beeinflussen. Bewegt sich ein solches Fahrzeug durch ein Magnetfeld, so ändert es lokal in der Umgebung des Fahrzeugs die Richtung des und/oder die Intensität des Magnetfeldes. Die Formulierung und/oder ist hier und im Folgenden als nicht ausschließende Disjunktion zu verstehen. Die Änderung ist durch einen Magnetfeldsensor quantifizierbar. Ein Magnetfeld ist an nahezu jeder Position auf der Erde durch das Erdmagnetfeld vorhanden. Im Folgenden wird ein an einem Ort vorhandenes Magnetfeld, beispielsweise das Erdmagnetfeld oder ein Magnetfeld eines in der Umgebung befindlichen Permanentmagneten, allgemein als Magnetfeld bezeichnet.

Ein Magnetfeld weist im dreidimensionalen Raum eine Ausrichtung auf, welche durch drei Komponenten in drei linear unabhängige Raumrichtungen darstellbar ist. Ein Magnetfeldsensor ermittelt eine dieser Komponenten in einer durch die Anordnung des Magnetfeldsensors gegebene Raumrichtung. Es sind auch Magnetfeldsensoren bekannt, welche alle drei Komponenten des Magnetfeldes ermitteln. Ein Magnetfeldsensor stellt mindestens eine Komponente des Magnetfelds als Magnetfeldsensorsignal bereit.

Erfindungsgemäss ermittelt ein im Hohlraum des WIM Sensors angeordneter Magnetfeldsensor das Magnetfeld und stellt es als Magnetfeldsensorsignal bereit.

Das Magnetfeldsensorsignal wird im Auswerteelement mit einem Algorithmus ausgewertet, wobei der zeitliche Verlauf und damit zeitliche Veränderungen des Magnetfeldsensorsignals erkannt werden und wobei eine Fahrzeugpräsenzinformation gebildet wird, welche die Präsenz eines Fahrzeugs über dem Magnetfeldsensor anzeigt.

Ein Fahrzeug auf einer Fahrbahn weist üblicherweise nach Richtlinie 96/53 /EG des Rates der Europäischen Union eine Breite bis zu 2.55 m oder nach 23 CFR Part 658 Sec. 658.15 des US Department of Transportation eine Breite bis zu 102 Zoll oder 2.6 m auf. Üblicherweise ist die Länge eines WIM Sensors kleiner als 2.5 m. Für eine Erfassung der Ausdehnung eines Fahrzeugs in Längsrichtung des WIM Sensors auf einer Fahrbahn mehrspurigen Strasse sind daher üblicherweise mehrere WIM Sensoren notwendig, welche in der Fahrbahn in Längsrichtung anstossend angeordnet sind. Mehrere in der Fahrbahn in Längsrichtung anstossend angeordnete WIM Sensoren sind in ihrer Gesamtheit als WIM System bezeichnet. Mindestens ein Teil der Informationen und Signale, welche in einem WIM Sensor bereitgestellt sind, sind in allen im WIM System angeordneten WIM Sensoren verfügbar.

Mit den Fahrzeugpräsenzinformationen mehrerer, in einem Abstand von vorteilhafterweise 50 mm bis 500 mm im Hohlraum angeordnete Magnetfeldsensoren ist die Abdeckung des WIM Systems durch das Fahrzeug ermittelbar. Die räumliche Position einer oder mehrerer Abdeckungen wird als Präsenzinformation bereitstellt.

Mit dem zeitlichen Verlauf der Präsenzinformation sind Kraftaufnehmersignale eindeutig einem Fahrzeug zuzuordnen. Dadurch sind Gesamtgewicht sowie Radlast der Räder eines Fahrzeugs ermittelbar. Die Bildung der Präsenzinformation ist nicht am Verbleib des Fahrzeugs in einem definierten Bereich, wie beispielsweise einer Fahrspur, gebunden, so lange es das WIM System quert.

Die Magnetfeldsensorsignale werden ebenfalls im Auswerteelement mittels eines Algorithmus ausgewertet, indem der Algorithmus die Magnetfeldsensorsignale mit vorab gespeicherten Magnetfeldsensorsignalen verschiedener Fahrzeugtypen vergleicht und das Fahrzeug einem Fahrzeugtyp zuordnet. Beispiele verschiedener Fahrzeugtypen sind nicht abschliessend aufgezählt mit Personenkraftwagen (PKW), PKW mit Anhänger, Krafträder, Krafträder mit Anhänger, Lieferwagen, Lastkraftwagen, Zugmaschinen, Sattelzug, Kraftomnibusse und Sonstige.

Mit dem zeitlichen Verlauf der Präsenzinformation ist eine dynamische Trajektorie des Fahrzeugs bekannt. Gewisse Fahrbewegungen beeinflussen die korrekte Ermittlung der Radlast. Dieser Einfluss wird durch eine Korrektur der ermittelten Radlasten minimiert, welche Korrektur auf der dynamischen Trajektorie des Fahrzeugs beruht.

Durch den Wegfall der im Stand der Technik notwendigen zusätzlichen separaten Sensoren zur Erkennung der Präsenz eines Fahrzeugs sind die Einbauzeiten reduziert und damit die Kosten für die Installation und für Strassensperren reduziert. Ebenfalls ist die WIM-Installation kostengünstig durch weitere WIM Sensoren vor bzw. hinter bestehenden Sensoren erweiterbar, ohne neue Induktionsschlaufen zur Erkennung der Präsenz eines Fahrzeugs in die Fahrbahn einfügen zu müssen.

Die Fahrbahn weist des Weiteren eine höhere Haltbarkeit auf, da die Installation des WIM Systems nur wenige schmale Schlitze in der Fahrbahn zum Einbau der WIM Sensoren benötigt. Die Fahrbahn wird nicht durch den Einbau von Induktionsschlaufen geschwächt, die eine generelle Gefahr für die Haltbarkeit der Fahrbahn darstellen. Zudem wird die Ausdehnung der WIM-Installation reduziert, welche Ausdehnung den Bereich darstellt, in dem die Strasse geschwächt ist.

### Kurze Beschreibung der Zeichnungen

Im Folgenden wird die Erfindung beispielhaft unter Beizug der Figuren näher erklärt. Es zeigen
- Fig. 1: eine schematische Teilansicht eines Fahrbahnabschnitts mit einem WIM Sensor im in einer Fahrbahn eingebautem Zustand, mit einer beispielhaften Veranschaulichung der Kraftaufnehmersignale der Kraftaufnehmer des WIM Sensors und mit einer beispielhaften Veranschaulichung der Magnetfeldsensoren des WIM Sensors,
- Fig. 2: eine schematische Teilansicht eines Fahrbahnabschnittes aus Fig. 1 im Schnitt AA', mit einem in die Fahrbahn eingebrachten WIM Sensor, mit einer beispielhaften Veranschaulichung der Kraftaufnehmersignale der Kraftaufnehmer des WIM Sensors und mit einer beispielhaften Veranschaulichung der Magnetfeldsensoren des WIM Sensors,
- Fig. 3: eine schematische Teilansicht einer mehrspurigen Fahrbahn mit Fahrzeugen und mit einem in der Fahrbahn angeordneten WIM System bestehend aus WIM Sensoren,
- Fig. 4: eine schematische Teilansicht der bereitgestellten Signale des WIM Sensors, mit Kraftaufnehmern, Magnetfeldsensoren und der bereitgestellten Signale im Auswerteelement,
- Fig. 5: eine schematische Teilansicht der bereitgestellten Signale der WIM Sensoren aus Fig. 4 innerhalb eines WIM Systems und der bereitgestellten Signale im Auswertelement.

### Wege zur Ausführung der Erfindung

Die Erfindung betrifft einen WIM Sensor 2 zur Ermittlung einer Last eines Fahrzeugs 12 auf einem Fahrbahnabschnitt 1. Ein Fahrbahnabschnitt 1 ist ein Teilbereich einer Fahrbahn 10. Eine Fahrbahn 10 ist ein in zwei räumlichen Richtungen X, Y ausgedehnter, befestigter Bereich, welcher für die Überfahrt von Fahrzeugen 12 vorgesehen ist. Die Fahrbahn 10 ist in mindestens eine Fahrspur 11 eingeteilt, die üblicherweise durch Fahrbahnmarkierungen kenntlich gemacht ist. Fahrzeuge 12 fahren auf einer für diese Fahrspur 11 festgelegte Fahrspurrichtung X. Eine Last ist eine Kraft, die eine Masse im Schwerefeld der Erde auf eine Fläche, beispielsweise eine Fahrbahn 10, ausübt.

Die Richtung senkrecht zur Fahrbahn 10 ist als Höhenrichtung Z bezeichnet. Die Richtung senkrecht zur Höhenrichtung Z und zur Fahrspurrichtung X wird als Breitenrichtung Y bezeichnet. Die Fahrspurbreite wird in Breitenrichtung Y bestimmt.

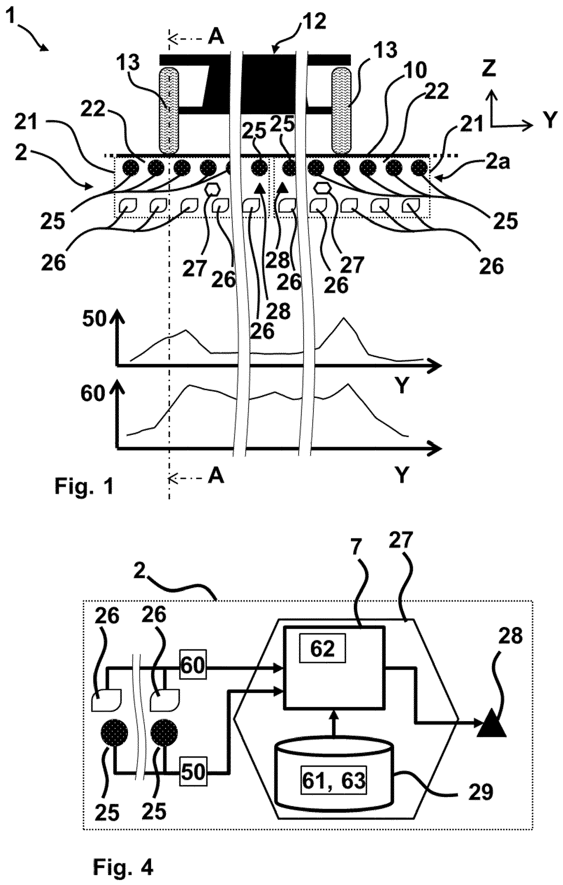

Fig. 1 zeigt eine schematische Schnittansicht senkrecht zur Fahrspurrichtung X der Fahrbahn 10 mit mehreren in der Fahrbahn 10 angeordneten WIM Sensoren 2; welche WIM Sensoren 2 mit der Oberfläche der Fahrbahn eine Ebene bilden. Eine Längsachse des WIM Sensors 2 ist weitgehend parallel zur Breitenrichtung Y der Fahrbahn 10 angeordnet. Ein WIM Sensor 2 ist schematisch durch ein gestricheltes Rechteck dargestellt. Innerhalb des Profils 21 des WIM Sensors 2 ist mindestens ein Kraftaufnehmer 25 angeordnet. In Fig. 1 ist eine bevorzugte Ausführungsform eines WIM Sensors 2 schematisch dargestellt, in welchem WIM Sensor 2 mehrere Kraftaufnehmer 25 schematisch dargestellt sind, welche Kraftaufnehmer 25 im Raum 22 des Profils 21 entlang der Breitenrichtung Y voneinander beabstandet angeordnet sind. Der Kraftaufnehmer 25 erzeugt ein Kraftaufnehmersignal 50. Fährt ein Rad 13 auf der Fahrbahn 10 über den WIM Sensor 2, so entspricht das Kraftaufnehmersignal 50 einer dynamischen Bodenreaktionskraft, welche durch das überfahrende Rad 13 hervorgerufen ist.

In einer bevorzugten Ausführungsform ist der Kraftaufnehmer 25 ein piezoelektrischer Kraftaufnehmer 25, welcher bei Krafteinwirkung eine elektrische Ladung erzeugt. In einer bevorzugten Ausführungsform ist das Kraftaufnehmersignal 50 ein digitales Signal, welches ein Analog-zu-Digitalwandler (auch kurz A/D-Wandler) aus einem Ladungsverstärkersignal erzeugt, welches Ladungsverstärkersignal von einem Ladungsverstärker erzeugt wird. Der Ladungsverstärker wandelt die elektrische Ladung eines Kraftaufnehmers 25 oder einer Gruppe bestehend aus mehreren Kraftaufnehmern 25, welche elektrisch parallel geschaltet sind. Mehrere Ladungsverstärker können in einem elektronischen Bauteil realisiert sein, beispielsweise in einer integrierten elektronischen Schaltung in einem Gehäuse. Ebenso kann ein A/D-Wandler über mehrere analoge Eingänge verfügen und mehrere Ladungssignale sowie weitere analoge Signale wandeln und als digitales Signal ausgeben. Ebenso können mindestens ein Ladungsverstärker und mindestens ein Analog-zu-Digitalwandler in einem elektronischen Bauteil realisiert sein, beispielsweise in einer integrierten elektronischen Schaltung.

Der Fachmann kann auch eine andere Art eines Kraftaufnehmers 25 verwenden, beispielsweise Dehnungsmessstreifen, piezoresistive Kraftaufnehmer oder Kraftaufnehmer, welche eine elastische Verformung anhand einer Änderung einer Kapazität oder Induktivität messen. Ein Signal des Kraftaufnehmers 25 wird mittels eines A/D-Wandlers gewandelt und als Kraftaufnehmersignal 50 bereitgestellt.

Unter der Bereitstellung eines Signals wird verstanden, dass das bereitgestellte Signal für eine weitere Verwendung verfügbar ist, beispielsweise für eine elektronische Verarbeitung in einem Mikroprozessor oder für die Verarbeitung in einem elektronischen Bauelement wie einem Ladungsverstärker oder A/D-Wandler. Ein bereitgestelltes Signal ist im Folgenden meist ein digitales Signal. Der Fachmann kann jedoch die nachfolgende Beschreibung auch mit analogen elektronischen Bauelementen und analogen Signalen realisieren. Bereitstellung eines Signals beinhaltet auch die Möglichkeit des Speicherns des Signals auf einem elektronischen Datenspeicher und des Ladens des Signals aus diesem Datenspeicher. Bereitstellung eines Signals beinhaltet auch das Darstellen des Signals auf einer Anzeige.

Das Kraftaufnehmersignal 50 ist mit einer zeitlichen Wiederholrate von mindestens 100 Hz bereitgestellt.

Die einzelnen Signale der Kraftaufnehmer 25 oder der Gruppen parallel geschalteter Kraftaufnehmer 25 sind im digitalen Kraftaufnehmersignal 50 enthalten und dem entsprechenden Kraftaufnehmer 25 oder der Gruppe parallel geschalteter Kraftaufnehmer 25 zuordenbar. Aus der bekannten geometrischen Position des Kraftaufnehmers 25 oder der Gruppe parallel geschalteter Kraftaufnehmer 25 ist die Position in Breitenrichtung Y eines auf die Fahrbahn 10 wirkenden Rads 13 bestimmbar, wie in Fig. 1 im oberen Grafen dargestellt.

Im Raum 22 ist mindestens ein Magnetfeldsensor 26 angeordnet. Der Magnetfeldsensor 26 ermittelt die Magnetfeldstärke in mindestens einer Raumrichtung, wobei die Magnetfeldstärke der Projektion eines Magnetfeldes auf mindestens eine Raumrichtung entspricht. Die Raumrichtung ist durch die geometrische Ausrichtung des Magnetfeldsensors 26 gegeben. Die ermittelte Magnetfeldstärke wird mittels eines A/D-Wandlers als Magnetfeldsensorsignal 60 bereitgestellt. Das Magnetfeldsensorsignal 60 ist im Folgenden ein digitales Signal. Der Fachmann kann jedoch auch ein analoges Signal als Magnetfeldsensorsignal 60 nutzen.

Der Magnetfeldsensor 26 ist bevorzugt als integrierte elektronische Schaltung mit A/D Wandler ausgeführt.

Der Magnetfeldsensor 26 ist bevorzugt in einer der folgenden Formen ausgeführt: ein Magnetfeldsensor 26, welcher auf dem magnetoresistiven oder anisotrop-magnetoresistiven oder riesen-magnetoresistiven (giant magnetoresistive) oder tunnel-magnetoresistiven oder riesen-magnetoinduktiven (giant-magnetic-inductance) Effekt basiert oder ein Magnetfeldsensor 26, welcher als Förster-Sonde (Fluxgate-Magnetometer) ausgebildet ist oder einem Magnetfeldsensor 26, welcher auf dem Hall-Effekt basiert. Selbstverständlich kann der Fachmann auch eine andere Bauform eines Magnetfeldsensors 26 verwenden.

In einer bevorzugten Ausführungsform ermittelt der Magnetfeldsensor 26 die Magnetfeldstärke des Magnetfeldes projiziert auf je eine von drei linear unabhängigen Raumrichtungen. Im Folgenden wird je eine der drei Raumrichtungen als parallel zur Höhenrichtung Z, zur Fahrspurrichtung X und zur Breitenrichtung Y angenommen. Der Fachmann kann natürlich eine beliebige Ausrichtung der drei Raumrichtungen wählen. Die Funktionsweise des WIM Sensors 2 ist dadurch nicht verändert. Das Magnetfeldsensorsignal 60 beinhaltet die ermittelte Magnetfeldstärke für jede der drei Raumrichtungen.

Mit der bekannten geometrischen Position in Breitenrichtung Y des Magnetfeldsensors 26 ist schematisch eine ermittelte Magnetfeldstärke für eine Raumrichtung in dem unteren Grafen in Fig. 1 dargestellt.

In bevorzugter Ausführungsform hat der Magnetfeldsensor 26 eine Sensitivität von mindestens 30 Mikrotesla. In besonders bevorzugter Ausführungsform hat der Magnetfeldsensor 26 eine Sensitivität von mindestens 1 Mikrotesla.

Die Wiederholrate des A/D-Wandlers beträgt mindestens 100 Hz. Die Wiederholrate gibt an, wie oft pro Sekunde ein analoges Signal digitalisiert und bereitgestellt wird. Ein einzelner Wert eines digitalen Signals wird als Sample bezeichnet.

Das Magnetfeldsensorsignal 60 wird von einem Auswerteelement 27 erfasst und ausgewertet. Das Auswerteelement 27 ist in einem Raum 22 angeordnet. Der Fachmann kann das Auswerteelement 27 auch ausserhalb des Profils 21 an einem beliebigen anderen Ort anordnen.

Das Auswerteelement 27 beinhaltet einen Mikroprozessor und/oder FPGA sowie mindestens einen nicht-flüchtigen Datenspeicher, beispielsweise ein EEPROM (electrically erasable programmable read-only memory). Auf dem Datenspeicher ist mindestens ein Algorithmus 7 gespeichert, welcher Algorithmus 7 in den Mikroprozessor ladbar ist. Der Algorithmus 7 ist im Mikroprozessor ausführbar und führt mathematische Operationen mit mindestens einem Eingangssignal, beispielsweise einem Magnetfeldsensorsignal 60 durch. Das Ergebnis wird bereitgestellt. Ist eine Grösse, ein Wert, ein Algorithmus 7, oder ähnliches im Auswerteelement 27 gespeichert, so ist selbstverständlich eine Speicherung im nicht-flüchtigen Datenspeicher gemeint.

Das Auswerteelement 27 wertet das Magnetfeldsensorsignal 60 mittels eines Algorithmus 7 aus, wobei der Algorithmus 7 die Differenz oder den Quotienten zwischen mindestens einem vorab im Auswerteelement 27 gespeicherten Kalibrationsmagnetfeldwert 61 und dem Magnetfeldsensorsignal 60 bildet. Das Ergebnis wird als ein Magnetfelddifferenzsignal 62 bereitgestellt. Der Kalibrationsmagnetfeldwert 61 weist für jede im Magnetfeldsensorsignal 60 auftretende Raumrichtung einen separaten Wert auf. Die Funktionsweise des Auswerteelement 27 in einem WIM Sensor 2 ist schematisch in Fig. 4 dargestellt.

Der Kalibrationsmagnetfeldwert 61 ist von der Ausrichtung des WIM Sensors 2 im Magnetfeld und der den WIM Sensor 2 umgebenden Materie abhängig. Der Kalibrationsmagnetfeldwert 61 wird mindestens einmal nach dem Einbau des WIM Sensors 2 in der Fahrbahn 10 ermittelt. Das Auswerteelement 27 berechnet mittels eines Algorithmus 7 den Mittelwert mehrerer, über einen definierten Zeitraum ermittelter Magnetfeldsensorsignale 60. Der Zeitraum kann von Millisekunden (ms) bis zu mehreren Minuten definiert sein. Der Mittelwert der über einen definierten Zeitraum ermittelter Magnetfeldsensorsignale 60 wird als Kalibrationsmagnetfeldwert 61 im Auswerteelement gespeichert. Der Algorithmus 7 zur Bestimmung des Kalibrationsmagnetfeldwert 61 wird vom geschulten Benutzer des WIM Sensors 2 zu einem frei wählbaren Zeitpunkt gestartet.

In einer Ausführungsform wird der Kalibrationsmagnetfeldwert 61 in zeitlichen Abständen von wenigen Sekunden bis mehreren hundert Stunden selbsttätig durch das Auswerteelement 27 ermittelt. Die selbsttätige Ermittlung startet nur, falls keine Präsenz eines Fahrzeugs 12 und kein Kraftaufnehmersignal 50 über einem bestimmten Schwellwert innerhalb einer vordefinierten Zeitspanne erfasst wurden. Wird innerhalb einer weiteren, vordefinierten Zeitspanne nach oder während der Ermittlung der Kalibrationsmagnetfeldwerte 61 eine Präsenz eines Fahrzeugs 12 oder ein Kraftaufnehmersignal 50 über einem bestimmten Schwellwert erfasst, so werden die Kalibrationsmagnetfeldwerte 61 verworfen. Eine erneute Ermittlung erfolgt nach einer vordefinierten Zeitspanne.

In vorteilhafter Ausführungsform wird der Kalibrationsmagnetfeldwert 61 andauernd selbsttätig durch das Auswerteelement 27 ermittelt. Die selbsttätige Ermittlung erfolgt, falls keine Präsenz eines Fahrzeugs 12 und kein Kraftaufnehmersignal 50 über einem bestimmten Schwellwert innerhalb einer vordefinierten Zeitspanne erfasst wurden. Wird innerhalb einer weiteren, vordefinierten Zeitspanne nach oder während der Ermittlung der Kalibrationsmagnetfeldwerte 61 eine Präsenz eines Fahrzeugs 12 oder ein Kraftaufnehmersignal 50 über einem bestimmten Schwellwert erfasst, so werden die Kalibrationsmagnetfeldwerte 61 verworfen.

In vorteilhafter Ausführungsform ermittelt der Magnetfeldsensor 26 die Magnetfeldstärke des Magnetfeldes in drei linear unabhängigen Raumrichtungen. Ein derartiger Magnetfeldsensor 26, auch 3-achsiges Magnetometer genannt, ist kommerziell erhältlich. Das Magnetfeldsensorsignal 60 eines solchen Magnetfeldsensors 26 beinhaltet die Magnetfeldstärke des Magnetfeldes in den drei Raumrichtungen, wobei die Magnetfeldstärke der auf die jeweilige Raumrichtung projizierten Komponente des Magnetfeldes entspricht.

Ist im Magnetfeldsensorsignal 60 die Magnetfeldstärke in den drei Raumrichtungen beinhaltet, so ist je ein Kalibrationsmagnetfeldwert 61 je einer der drei linear unabhängigen Raumrichtungen zuordenbar, wobei die drei Kalibrationsmagnetfeldwerte 61 vorab im Auswerteelement 27 gespeichert sind. Entsprechend bildet das Auswerteelement 27 mittels eines Algorithmus 7 für jede der drei Raumrichtungen die Differenz oder den Quotienten zwischen dem Kalibrationsmagnetfeldwert 61 und dem Magnetfeldsensorsignal 60. Die Differenzen oder die Quotienten werden vom Auswerteelement 27 als Magnetfelddifferenzsignal 62 bereitgestellt, welches für jede der drei Raumrichtungen einen Eintrag beinhaltet.

Ein Algorithmus 7 vergleicht das Magnetfelddifferenzsignal 62 mit mindestens einem vorab im Auswerteelement 27 gespeicherten Magnetfeldgrenzbereich 63. Der Magnetfeldgrenzbereich 63 ist vorab festgelegt und bestimmt ab welchem Magnetfelddifferenzsignal 62 die Präsenz eines Fahrzeugs 12 vorliegt.

In vorteilhafter Ausführungsform wird der Magnetfeldgrenzbereich 63 durch einen Benutzer des WIM Sensors 2 im in der Fahrbahn 10 eingebauten Zustand des WIM Sensors 2 festgelegt und im Auswerteelement 27 gespeichert.

In einer Ausführungsform bildet der Algorithmus 7 eine Präsenz eines Fahrzeugs 12, wenn das Magnetfelddifferenzsignal 62 den Magnetfeldgrenzbereich 63 verlässt. Das Verlassen des Magnetfeldgrenzbereichs 63 durch das Magnetfelddifferenzsignal 62 ist dann gegeben, wenn ein Fahrzeug 12 durch seine Präsenz über dem WIM Sensor 2 das bestehende Magnetfeld beeinflusst. Das Fahrzeug 12 kann beispielsweise ein den WIM Sensor 2 überfahrendes Fahrzeug 12 sein. Der Algorithmus 7 ermittelt ab Verlassen des Magnetfeldgrenzbereichs 63 den zeitlichen Verlauf des Magnetfelddifferenzsignals 62. Das Ende einer Präsenz ist erst dann gegeben, wenn das Magnetfelddifferenzsignal 62 sich wieder im Magnetfeldgrenzbereich 63 befindet und dort eine definierte Zeitspanne verbleibt. Vorteilhafterweise beträgt diese Zeitspanne das zehnfache der vollen Halbwertsbreite (Full Duration at Half Maximum, kurz FDHM) des zuletzt detektierten Kraftaufnehmersignals 50. Die Zeitspanne kann jedoch auch auf einen festen wert, beispielsweise einem Wert zwischen 10 ms und 500 ms definiert sein. Das Magnetfelddifferenzsignal 62 kann während andauernder Präsenz das Vorzeichen wechseln. Das Magnetfelddifferenzsignal 62 kann sich während andauernder Präsenz kurzzeitig wiederholt im Magnetfeldgrenzbereich 63 befinden. Kurzzeitig ist dabei als kürzer als die oben genannte Zeitspanne.

Der Algorithmus 7 stellt die Präsenz eines Fahrzeugs 12 als Fahrzeugpräsenzinformation 70 bereit.

In einer Ausführungsform weist das Magnetfelddifferenzsignal 62 für jede Raumrichtung einen Eintrag auf und der Algorithmus 7 bildet eine Präsenz eines Fahrzeugs 12, wenn mindestens zwei der Einträge des Magnetfelddifferenzsignals 62 den zugehörigen Magnetfeldgrenzbereich 63 verlassen und über den weiteren zeitlichen Verlauf des Magnetfelddifferenzsignals 62 eine Korrelation mindestens zweier Einträge des Magnetfelddifferenzsignals 62 vorliegt. Der Algorithmus 7 ermittelt ab Verlassen des Magnetfeldgrenzbereichs 63 den zeitlichen Verlauf des Magnetfelddifferenzsignals 62. Einzelne Einträge des Magnetfelddifferenzsignals 62 können während andauernder Präsenz das Vorzeichen wechseln. Das Ende einer Präsenz ist erst dann gegeben, wenn mindestens zwei Einträge des Magnetfelddifferenzsignals 62 sich wieder im zugehörigen Magnetfeldgrenzbereich 63 befinden und dort für eine definierte Zeitspanne verbleiben. Vorteilhafterweise beträgt diese Zeitspanne das zehnfache der vollen Halbwertsbreite (Full Duration at Half Maximum, kurz FDHM) des zuletzt detektierten Kraftaufnehmersignals 50. Die Zeitspanne kann jedoch auch auf einen festen Wert, beispielsweise einem Wert zwischen 10 ms und 500 ms definiert sein.

Der Magnetfeldsensor 26 stellt das Magnetfeldsensorsignal 60 mit einer zeitlichen Wiederholrate von mindestens 100 Hz bereit.

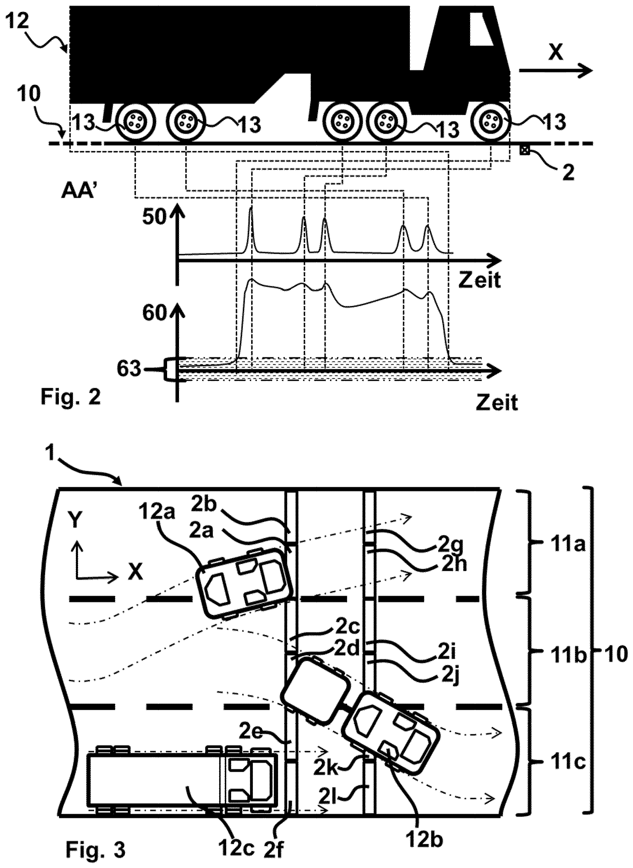

Ein zeitlicher Verlauf des Kraftaufnehmersignals 50 eines Kraftaufnehmers 25, welcher an einer Position in Breitenrichtung Y nahe der Schnittebene AA' aus Fig. 1 angeordnet ist, ist schematisch im oberen Grafen in Fig. 2 für ein den WIM Sensor überfahrendes Fahrzeug dargestellt. Ein zeitlicher Verlauf des Magnetfelddifferenzsignals ist schematisch im unteren Grafen in Fig. 2 für eine den WIM Sensor überfahrendes Fahrzeug dargestellt. Gestrichelte Linien verdeutlichen welches Element des Fahrzeugs sich zu einem Zeitpunkt im Grafen bei der Überfahrt über dem WIM Sensor befindet.

Fig. 3 zeigt eine Teilansicht einer Fahrbahn 10 mit in der Fahrbahn 10 angeordneten WIM Sensoren 2a bis 2l. Ein Bezugszeichen mit nachgestellten Buchstaben bezeichnet ein mehrfach auftretendes Bezugszeichen. Das Element, auf welches sich das Bezugszeichen mit nachgestelltem Buchstaben bezieht, gleicht dem Element, auf welches sich das Bezugszeichen ohne nachgestellten Buchstaben bezieht.

In einer ersten Gruppe sind WIM Sensoren 2a bis 2f senkrecht zur Fahrspurrichtung X ausgerichtet und nebeneinander an ihren Enden bezüglich der Breitenrichtung Y anstössig angeordnet. Die WIM Sensoren 2a bis 2f queren somit mehrere Fahrspuren 11a bis 11c der Fahrbahn 10 in Breitenrichtung Y. Eine zweite Gruppe WIM Sensoren 2g bis 2l ist in Fahrspurrichtung X beabstandet angeordnet. Die WIM Sensoren 2g bis 2l der zweiten Gruppe sind senkrecht zur Fahrspurrichtung X ausgerichtet und nebeneinander an ihren Enden bezüglich der Breitenrichtung Y anstössig angeordnet und queren somit mehrere Fahrspuren 11a bis 11c der Fahrbahn 10 in Breitenrichtung Y. Eine Radspur eines Fahrzeugs 12a bis 12c, welche Radspur als gepunktete Linie mit Pfeil zur Richtungsangabe dargestellt ist, kreuzt somit mindestens einen WIM Sensor 2a bis 2f der ersten Gruppe und einen WIM Sensor 2g bis 2l der zweiten Gruppe.

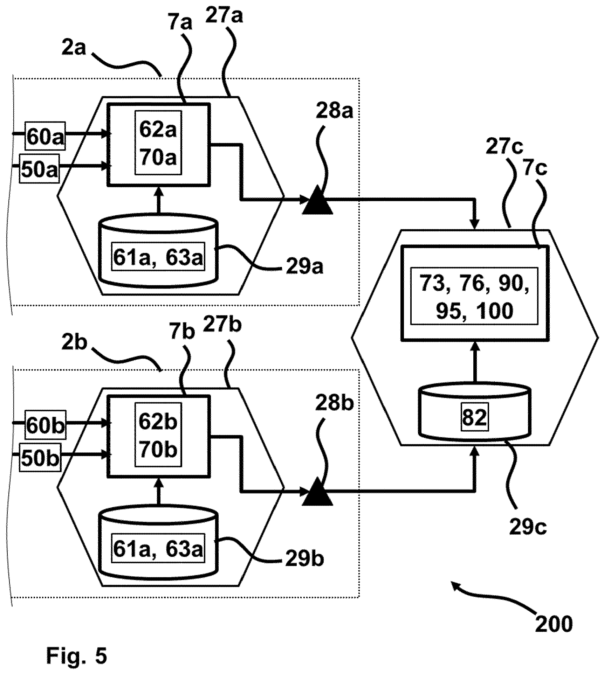

Fig. 5 zeigt schematisch einen Teil eines WIM Systems 200. Exemplarisch sind zwei WIM Sensoren 2a, 2b dargestellt, welche Teil des WIM Systems 200 sind, sowie ein Auswerteelement 27c, welches in einem WIM Sensor 2 oder an einer beliebigen anderen Position angeordnet ist, beispielsweise in einem Schaltschrank neben der Fahrbahn 10 oder in einem Rechenzentrum.

Im Profil 21 jedes WIM Sensors 2a bis 2l des WIM Systems 200 ist jeweils mindestens eine elektronische Datenübermittlungseinheit 28a, 28b angeordnet, welche elektronisch mit dem Auswerteelement 27a bis 27c verbunden ist. Diese übermittelt Daten mittels eines elektrischen Leiters oder mittels Funkkommunikation mit elektromagnetischen Wellen an mindestens eine weitere Datenübermittlungseinheit 28a, 28b, wodurch die WIM Sensoren 2a bis 2l eines WIM Systems 200 mittels der elektronischen Datenübermittlungseinheit 28a, 28b untereinander verbunden sind und sich wechselseitig Daten übermitteln. Dies ist als BUS-System in der digitalen Datenverarbeitung bekannt. Mindestens ein Teil der bereitgestellten Informationen, welche in den WIM Sensoren 2a bis 2f des WIM Systems 200 ermittelt und bereitgestellt sind, werden mittels der Datenübermittlungseinheit 28a, 28b übermittelt und sind prinzipiell in mindestens einem Auswerteelement 27a bis 27c mindestens eines WIM Sensors 2a bis 2l verfügbar und in einem Algorithmus 7 nutzbar. Von dem Auswerteelement 27a bis 27c bereitgestellte Signale sind beispielsweise eine Fahrzeugpräsenzinformation 70a, 70b, ein Magnetfeldsensorsignal 60a, 60b, ein Kraftaufnehmersignal 50a, 50b, ein Magnetfelddifferenzsignal 62a, 62b, ein Kalibrationsmagnetfeldwert 61a, 61b, ein Magnetfeldgrenzbereich 63a, 63b.

Ein vom Auswerteelement 27a bis 27c bereitgestelltes Signal ist in einer Ausführungsform des WIM Systems 200 zusätzlich mindestens ein Sensorsignal eines Sensors, welcher eine physikalische Grösse ermittelt und welcher ein Sensorsignal bereitstellt, wie beispielsweise ein Temperatursensor.

In einer Ausführungsform ist mindestens ein zusätzliches Auswerteelement 27c im Fahrbahnabschnitt 1 angeordnet, beispielsweise in einem Schaltschrank neben der Fahrbahn 10. Das zusätzliche Auswerteelement 27c ist mittels einer im Fahrbahnabschnitt 1 angeordneten elektronischen Datenübermittlungseinheit 28 mit mindestens einem Auswerteelement 27a, 27b verbunden, wobei eine wechselseitige Datenübermittlung möglich ist.

In einem Auswerteelement 27a bis 27c ist dementsprechend die Fahrzeugpräsenzinformation 70a, 70b der in den WIM Sensoren 2 des WIM Systems 200 angeordneten Magnetfeldsensoren 26 verfügbar und wird mittels eines Algorithmus 7 verarbeitet. Der Algorithmus 7a bis 7c vergleicht die Fahrzeugpräsenzinformation 70a, 70b benachbarter Magnetfeldsensoren 26 auf Unterschiede, welche zeigen dass ein Fahrzeug 12a bis 12c in einer Ausdehnungsrichtung endet, und erstellt daraus eine Abdeckung des WIM Systems 200 durch ein Fahrzeug 12a bis 12c. Mit der Fahrzeugpräsenzinformation 70a, 70b benachbarter Magnetfeldsensoren 26 stellt der Algorithmus 7a, 7b, 7c eine Fahrzeuggrenze fest.

In einer Ausführungsform nutzt der Algorithmus 7a bis 7c zur Feststellung der Fahrzeuggrenze die Fahrzeugpräsenzinformation 70a, 70b mehr als eines benachbarten Magnetfeldsensors 26.

Ist mindestens eine Fahrspur 11a bis 11c durch das WIM System 200 gequert, so ist mindestens eine Fahrzeuggrenze feststellbar bei der gänzlichen oder teilweisen Querung des WIM Systems 200 durch Fahrzeuge 12a bis 12c. Aus der Anzahl der benachbarten Magnetfeldsensoren 26 mit einer festgestellten Präsenz eines Fahrzeugs 12 erstellt der Algorithmus 7a bis 7c die räumliche Ausdehnung der Abdeckung in Breitenrichtung Y. Die räumliche Ausdehnung der Abdeckung in Breitenrichtung Y wird zusammen mit mindestens einer räumlichen Position einer Fahrzeuggrenze vom Auswerteelement 27a bis 27c als Ausdehnungsinformation 73 bereitstellt.

Queren mehrere Fahrzeuge 12a bis 12c ein WIM System 200 derart, dass während der Querung beide Fahrzeuge 12a bis 12c das WIM System 200 teilweise in unterschiedlichen Bereichen bezüglich der Breitenrichtung Y abdecken, so stellt der Algorithmus 7 die Abdeckung des WIM Systems 200 durch mehr als ein Fahrzeug 12a bis 12c fest, da der Algorithmus 7 mindestens zwei Fahrzeuggrenzen ermittelt, welche in Breitenrichtung Y beabstandet sind, zwischen denen befindliche Magnetfeldsensoren 26 jedoch keine Präsenz eines Fahrzeugs 12 anzeigen. Der Abstand zwischen zwei Fahrzeugen 12a bis 12c in Breitenrichtung Y beträgt mehr als der doppelte Abstand zwischen zwei Magnetfeldsensoren 26. Der Algorithmus 7a bis 7c stellt die räumlichen Ausdehnungen der Abdeckungen der mindestens zwei unterschiedlichen Fahrzeuge 12a bis 12c mit den räumlichen Positionen der mindestens zwei Fahrzeuggrenzen als Ausdehnungsinformation 73 bereit. Die Anzahl der Fahrzeuge 12a bis 12c, die gleichzeitig an unterschiedlichen Positionen bezüglich der Breitenrichtung Y das WIM-System 200 abdecken ist ausschliesslich durch die Ausdehnung der Fahrzeuge 12a bis 12c in Breitenrichtung Y und die Ausdehnung des WIM Systems 200 in Breitenrichtung Y beschränkt.

Das Auswerteelement 27a bis 27c wertet die zeitliche Änderung der Ausdehnungsinformation 73, welche in Fig. 5 dargestellt ist, mittels eines Algorithmus 7a bis 7c aus. Der Algorithmus 7a bis 7c bildet den zeitlichen Anfang der Präsenz eines Fahrzeugs 12a bis 12c und stellt diese als Präsenzanfang bereit. Der Algorithmus 7a bis 7c bildet das zeitliche Ende einer Präsenz und stellt dieses als Präsenzende bereit.

Präsenzanfang, Präsenzende, Ausdehnung eines Fahrzeugs 12a bis 12c und mindestens eine Fahrzeuggrenze werden als Präsenzinformation 76 bereitstellt. Die Präsenzinformation 76 wird bevorzugt mit einer Wiederholrate von mindestens 100 Hz bereitstellt.

Bei Präsenz mindestens eines Fahrzeugs 12a bis 12c ermittelt das Auswerteelement 27a bis 27c mittels eines Algorithmus 7 aus erfassten Kraftaufnehmersignalen 50a, 50b während der Präsenz des Fahrzeugs 12a bis 12c die Anzahl der Räder 13 des Fahrzeugs 12a bis 12c, welche Kraftaufnehmersignale 50 zwischen einem Präsenzanfang und einem Präsenzende aufgenommen sind. Das Auswerteelement 27a bis 27c ordnet mittels eines Algorithmus 7 die Anzahl der Räder 13 und die Ausdehnungsinformation 73 einem Fahrzeug 12a bis 12c zu.

In einer Ausführungsform ermittelt der Algorithmus die Anzahl der Räder 13 aus dem zeitlichen Verlauf der Präsenzinformation.

Der Algorithmus 7a bis 7c vergleicht die Anzahl der Räder 13 und die Ausdehnungsinformation 73 des Fahrzeugs 12a bis 12c mit mindesten einer vorab definierten Fahrzeugkategorie 82. Liegen die Anzahl der Räder 13 und die Ausdehnungsinformation 73 des Fahrzeugs 12a bis 12c innerhalb der Fahrzeugkategorie 82, so wird das Fahrzeug 12a bis 12c der entsprechenden Fahrzeugkategorie 82 zugeordnet. Der Algorithmus 7 stellt mindestens einen Teil der zwischen einem Präsenzanfang und einem Präsenzende bereitgestellten Signale zusammen mit der Fahrzeugkategorie 82 bereit.

In einer bevorzugten Ausführungsform besteht ein WIM System 200 aus mindestens drei WIM Sensoren 2a bis 2l. Mindestens ein erster WIM Sensor 2a bis 2l ist in Fahrspurrichtung X bezüglich der Längsachse von mindestens einem zweiten WIM Sensor 2a bis 2l beabstandet in einem bekannten Abstand im Fahrbahnabschnitt 1 in der Fahrbahn 10 angeordnet. Das Auswerteelement 27a bis 27c bildet aus der Zeitdifferenz zwischen der Erfassung eines Rads 13 eines Fahrzeugs 12a bis 12c am ersten WIM Sensor 2a bis 2f und der Erfassung desselben Rads 13 am zweiten WIM Sensor 2g bis 2l und dem bekannten Abstand der ersten WIM Sensor 2a bis 2f und der zweiten WIM Sensoren 2g bis 2l die Geschwindigkeit des Fahrzeugs 12a bis 12c und stellt die Geschwindigkeit als Geschwindigkeitsinformation 90 bereit. Der Abstand des ersten WIM Sensors 2a bis 2f und des zweiten WIM Sensor 2g bis 2l ist so zu wählen, dass die Zeitdifferenz bei Überfahrt des Rades mit der doppelten auf der Fahrspur erlaubten Geschwindigkeit mindestens 10 ms beträgt.

Das Auswerteelement 27a bis 27c bildet mittels eines Algorithmus 7a bis 7c aus mindestens einem Kraftaufnehmersignal 50a 50b und der Geschwindigkeitsinformation 90 die Last eines Rads 13 und stellt diese als Radlast bereit. Mindestens einen Teil der zwischen einem Präsenzanfang und einem Präsenzende bereitgestellten Signale wird zusammen mit der Fahrzeugkategorie 82 als Fahrzeugdossier 100 bereitgestellt.

Der Abstand zwischen Magnetfeldsensoren 26 beträgt in einer Ausführungsform nicht weniger als 10 mm und nicht mehr als 500 mm.

In einer Ausführungsform beträgt der Abstand zwischen Magnetfeldsensoren 26 nicht weniger als 200 mm und nicht mehr als 300 mm.

**Bezugszeichenliste**

| | |
|---|---|
| Fahrbahnabschnitt | 1 |
| WIM Sensor | 2, 2a bis 2l |
| Algorithmus | 7, 7a, bis 7c |
| Fahrbahn | 10 |
| Fahrspur | 11 |
| Fahrzeug | 12, 12a bis 12c |
| Rad | 13 |
| Profil | 21 |
| Raum | 22 |
| Kraftaufnehmer | 25 |
| Magnetfeldsensor | 26 |
| Auswerteelement | 27 27a bis 27c |
| Datenübermittlungseinheit | 28 |
| Datenspeicher | 29 |
| Kraftaufnehmersignal | 50, 50a, 50b |
| Magnetfeldsensorsignal | 60, 60a, 60b |
| Kalibrationsmagnetfeldwert | 61, 61a, 61b |
| Magnetfelddifferenzsignal | 62, 62a, 62b |
| Magnetfeldgrenzbereich | 63, 63a, 63b |
| Fahrzeugpräsenzinformation | 70, 70a, 70b |
| Ausdehnungsinformation | 73 |
| Präsenzinformation | 76 |
| Fahrzeugkategorie | 82 |
| Geschwindigkeitsinformation | 90 |
| Radlast | 95 |
| Fahrzeugdossier | 100 |
| WIM System | 200 |
| Fahrspurrichtung | X |
| Breitenrichtung | Y |
| Höhenrichtung | Z |

## Patentansprüche

1. WIM Sensor (2); welcher WIM Sensor (2) in einem Fahrbahnabschnitt (1) in einer Fahrbahn (10) angeordnet ist; welcher WIM Sensor (2) als ein Profil (21) mit mindestens einem Raum (22) ausgeführt ist; in welchem Raum (22) mindestens ein Kraftaufnehmer (25) angeordnet ist; welcher Kraftaufnehmer (25) ein Kraftaufnehmersignal (50) erzeugt; welches Kraftaufnehmersignal (50) einer dynamischen Bodenreaktionskraft bei Überfahrt des Rads (13) entspricht, welches Rad (13) eine Radlast (95) auf die Fahrbahn (10) ausübt; **dadurch gekennzeichnet, dass** im Raum (22) mindestens ein Magnetfeldsensor (26) angeordnet ist; und dass der Magnetfeldsensor (26) eine Magnetfeldstärke eines Magnetfeldes misst und als Magnetfeldsensorsignal (60) bereitstellt.

2. WIM Sensor (2) nach Anspruch 1, **dadurch gekennzeichnet, dass** der Magnetfeldsensor (26) die Magnetfeldstärke des Magnetfeldes in mindestens einer Raumrichtung ermittelt und als Magnetfeldsensorsignal (60) bereitstellt.

3. WIM Sensor (2) nach Anspruch 2, **dadurch gekennzeichnet, dass** ein Auswerteelement (27) im Raum (22) angeordnet ist; das im Auswerteelement (27) mindestens ein Algorithmus (7) gespeichert ist; das mindestens ein Algorithmus (7) im Auswerteelement (27) ausführbar ist; dass das Auswerteelement (27) mindestens ein Magnetfeldsensorsignal (60) mittels des Algorithmus (7) auswertet; das der Algorithmus (7) die Differenz oder den Quotienten zwischen mindestens einem im Auswerteelement (27) gespeicherten Kalibrationsmagnetfeldwert (61) und dem Magnetfeldsensorsignal (60) bildet und das Auswerteelement (27) die Differenz oder den Quotienten als Magnetfelddifferenzsignal (62) bereitstellt.

4. WIM Sensor (2) nach Anspruch 3, **dadurch gekennzeichnet, dass** der Magnetfeldsensor (26) das Magnetfeld in drei linear unabhängigen Raumrichtungen ermittelt; dass das Magnetfeldsensorsignal (60) die Magnetfeldstärke in den drei Raumrichtungen beinhaltet; dass mindestens drei Kalibrationsmagnetfeldwerte (61) im Auswerteelement (27) gespeicherten sind, wobei je ein Kalibrationsmagnetfeldwert (61) je einer der drei linear unabhängigen Raumrichtungen zuordenbar ist; das der Algorithmus (7) für jede der drei Raumrichtungen die Differenz oder den Quotienten zwischen dem Kalibrationsmagnetfeldwert (61) und der im Magnetfeldsensorsignal (60) enthaltenen Magnetfeldstärke für diese Raumrichtung bildet; und dass das Auswerteelement (27) diese Differenzen oder Quotienten als Magnetfelddifferenzsignal (62) bereitstellt.

5. WIM Sensor (2) nach einem der Ansprüche 3 oder 4, **dadurch gekennzeichnet, dass** das Rad (13) an einem Fahrzeug (12) angeordnet ist; dass der Algorithmus (7) das Magnetfelddifferenzsignal (62) mit mindestens einem vorab im Auswerteelement (27) gespeicherten Magnetfeldgrenzbereich (63) vergleicht; dass der Algorithmus (7) bei Verlassen des Magnetfeldgrenzbereichs (63) durch das Magnetfelddifferenzsignal (62) eine Präsenz eines Fahrzeugs (12) bildet, welches Fahrzeug (12) durch seine Präsenz ein bestehendes Magnetfeld beeinflusst; und dass das Auswerteelement (27) die Präsenz eines Fahrzeugs (12) als Fahrzeugpräsenzinformation (70) bereitstellt.

6. WIM Sensor (2) nach Anspruch 4, **dadurch gekennzeichnet, dass** das Auswerteelement (27) mittels eines Algorithmus (7) das Magnetfelddifferenzsignal (62) mit mindestens drei vorab im Auswerteelement (27) gespeicherten Magnetfeldgrenzbereichen (63) vergleicht; dass der Algorithmus (7) eine zeitliche Korrelation der drei Signale Magnetfelddifferenzsignale (62) auswertet; dass der Algorithmus (7) die Präsenz eines Fahrzeugs (12)bei mindestens einer erkannten Korrelation zweier der Magnetfelddifferenzsignale (62) bildet, welches Fahrzeug (12) durch seine Präsenz ein bestehendes Magnetfeld beeinflusst; und dass das Auswerteelement (27) die Präsenz eines Fahrzeugs (12) als Fahrzeugpräsenzinformation (70) bereitstellt.

7. WIM Sensor (2) nach einem der Ansprüche 5 bis 6, **dadurch gekennzeichnet, dass** das Magnetfeldsensorsignal (60) mit einer zeitlichen Wiederholrate von mindestens 100 Hz bereitgestellt ist; und dass das Auswerteelement (27) mittels eines Algorithmus (7) die Fahrzeugpräsenzinformation (70) mit einer zeitlichen Wiederholrate von mindestens 100 Hz bildet und bereitstellt.

8. WIM Sensor (2) nach einem der Ansprüche 1 bis 7, **dadurch gekennzeichnet, dass** das der Abstand zwischen Magnetfeldsensoren (26) nicht weniger als 10 mm und nicht mehr als 500 mm beträgt oder dass der Abstand zwischen Magnetfeldsensoren (26) nicht weniger als 200 mm und nicht mehr als 300 mm beträgt.

9. WIM System (200) bestehend aus mindestens zwei WIM Sensoren (2, 2a bis 2l) nach einem der Ansprüche 4 bis 8; welche WIM Sensoren (2, 2a bis 2l) nebeneinander anstossend in einem Fahrbahnabschnitt (1) angeordnet sind; **dadurch gekennzeichnet, dass** die WIM Sensoren (2, 2a bis 2l) des WIM Systems (200) eine elektronische Datenübermittlungseinheit (28, 28a, 28b) aufweisen; dass die WIM Sensoren (2, 2a bis 2l) eines WIM Systems (200) mittels der elektronischen Datenübermittlungseinheit (28, 28a, 28b) untereinander verbunden sind; dass die Verbindung mittels eines elektrischen Leiters oder mittels elektromagnetischer Wellen ausgeführt ist; dass mindestens ein Teil der bereitgestellten Informationen, welche in den WIM Sensoren (2, 2a bis 2l) des WIM Systems (200) ermittelt und bereitgestellt sind, im Auswerteelement (27, 27a bis 27c) nutzbar sind.

10. WIM System (200) nach Anspruch 9, **dadurch gekennzeichnet, dass** das Auswerteelement (27, 27a, 27b) mit einem Algorithmus (7, 7a bis 7c) die Fahrzeugpräsenzinformationen (70, 70a, 70b) der im WIM System (200) angeordneten Magnetfeldsensoren (26) vergleicht; dass der Algorithmus (7, 7a bis 7c) die Abdeckung des WIM Systems (200) durch mindestens ein Fahrzeug (12, 12a bis 12c) feststellt; dass der Algorithmus (7, 7a bis 7c) bei Abdeckung des WIM Systems (200) durch mindestens ein Fahrzeug (12, 12a bis 12c) mindestens eine Fahrzeuggrenze feststellt; und dass der Algorithmus (7, 7a bis 7c) die räumliche Ausdehnung der Abdeckung mit mindestens einer räumlichen Position einer Fahrzeuggrenze als Ausdehnungsinformation (73) bereitstellt.

11. WIM System (200) nach Anspruch 10, **dadurch gekennzeichnet, dass** das Auswerteelement (27, 27a bis 27c) die zeitliche Änderung der Ausdehnungsinformation (73) mittels eines Algorithmus (7, 7a bis 7c) auswertet; dass der Algorithmus (7, 7a bis 7c) den zeitlichen Anfang einer Präsenz als Präsenzanfang bildet; dass der Algorithmus (7, 7a bis 7c) das zeitliche Ende einer Präsenz als Präsenzende bildet; dass der Algorithmus (7, 7a bis 7c) Fahrzeuggrenzen ermittelt; dass der Algorithmus (7, 7a bis 7c) die räumliche Ausdehnung mindestens eines Fahrzeugs (12a bis 12c) ermittelt und als Präsenzinformation (76) bereitstellt.

12. WIM System (200) nach Anspruch 11; **dadurch gekennzeichnet, dass** das Auswerteelement (27, 27a bis 27c) mittels eines Algorithmus (7, 7a bis 7c) aus erfassten Kraftaufnehmersignalen (50, 50a, 50b) die Anzahl der Räder (13) eines Fahrzeugs (12a bis 12c) ermittelt, welche Kraftaufnehmersignale (50, 50a, 50b) zwischen einem Präsenzanfang und einem Präsenzende aufgenommen sind; dass das Auswerteelement (27) mittels eines Algorithmus (7) die Anzahl der Räder (13) und die Ausdehnungsinformation (73) eines Fahrzeugs (12a bis 12c) mit mindesten einer vorab definierten Fahrzeugkategorie (82) vergleicht; dass der Algorithmus (7, 7a, bis 7c) dem Fahrzeug (12a bis 12c) anhand der Anzahl der Räder (13) und der Ausdehnungsinformation (73) eine Fahrzeugkategorie (82) zuordnet, wenn die Anzahl der Räder (13) und die Ausdehnungsinformation (73) sich innerhalb der Fahrzeugkategorie (82) befinden; und dass der Algorithmus (7, 7a bis 7c) einen Teil der zwischen einem Präsenzanfang und einem Präsenzende bereitgestellten Signale zusammen mit der Fahrzeugkategorie (82) bereitstellt.

13. WIM System (200) bestehend aus mindestens drei WIM Sensoren (2, 2a bis 2l) nach einem der Ansprüche 11 bis 12; wobei mindestens ein erster WIM Sensor (2, 2a bis 2l) in Fahrspurrichtung (X) von mindestens einem zweiten WIM Sensor (2, 2a bis 2l) beabstandet im Fahrbahnabschnitt (1) in der Fahrbahn (10) angeordnet ist; **dadurch gekennzeichnet, dass** das Auswerteelement (27, 27a bis 27c) mittels eines Algorithmus (7, 7a bis 7c) aus erfassten Kraftaufnehmersignalen (50, 50a, 50b) die Anzahl der Räder (13) eines Fahrzeugs (12a bis 12c) ermittelt, welche Kraftaufnehmersignale (50, 50a, 50b) zwischen einem Präsenzanfang und einem Präsenzende aufgenommen sind; dass ein Algorithmus (7, 7a bis 7c) die Geschwindigkeit eines Fahrzeugs (12a bis 12c) aus der Zeitdifferenz zwischen der Erfassung eines Rads (13) am ersten WIM Sensor (2, 2a bis 2l) und der Erfassung desselben Rads (13) am zweiten WIM Sensor (2, 2a bis 2l) bildet und als Geschwindigkeitsinformation (90) bereitstellt; dass das Auswerteelement (27, 27a bis 27c) mittels eines Algorithmus (7, 7a bis 7c) aus mindestens einem Kraftaufnehmersignal (50, 50a, 50b) und der Geschwindigkeitsinformation (90) die Last eines Rads (13) bildet und als Radlast (95) bereitstellt, und dass der Algorithmus (7, 7a bis 7c) mindestens einen Teil der zwischen einem Präsenzanfang und einem Präsenzende bereitgestellten Signale zusammen mit der Fahrzeugkategorie (82) als Fahrzeugdossier (100) bereitstellt.

14. WIM System (200) nach einem der Ansprüche 11 bis 13, **dadurch gekennzeichnet, dass** das Auswerteelement mittels eines Algorithmus aus dem zeitlichen Verlauf der Präsenzinformation (76) dynamische Fahrbewegungen des Fahrzeugs ermittelt; dass der vorab bekannte Einfluss der dynamischen Fahrbewegungen auf die Ermittlung der Radlast (95) mittels des Algorithmus minimiert wird; und dass die korrigierte Radlast (95) bereitgestellt wird.

15. Verfahren zur Ermittlung einer Präsenz eines Fahrzeuges (12, 12a bis 12c) über einem WIM Sensor (2, 2a bis 2l) eines WIM Systems (200), unter Verwendung des WIM Sensors (2, 2a bis 2l) nach einem der Ansprüche 1 bis 8, **dadurch gekennzeichnet, dass** die Präsenz eines Fahrzeugs (12, 12a bis 12c) anhand einer durch das Fahrzeug (12, 12a bis 12c) hervorgerufenen Änderung des Erdmagnetfelds an der Position der Magnetfeldsensoren (26) des WIM Systems (200) ermittelt wird; dass die Fahrzeuggrenzen des Fahrzeugs (12, 12a bis 12c) anhand der durch das Fahrzeug (12, 12a bis 12c) hervorgerufenen Änderung des Erdmagnetfelds ermittelt wird; dass durch den zeitlichen Verlauf der durch das Fahrzeug (12, 12a bis 12c) hervorgerufenen Änderung des Erdmagnetfelds der Anfang und das Ende eines Fahrzeugs (12, 12a bis 12c) ermittelt wird; und dass mit den Fahrzeuggrenzen und dem Anfang und Ende des Fahrzeugs (12, 12a bis 12c) mittels Kraftsensoren (26) ermittelte Radlasten (95) der Räder (13) des Fahrzeugs (12, 12a bis 12c) eindeutig dem Fahrzeug (12, 12a bis 12c) zugeordnet werden; und dass aus der Summe der Radlasten (95) das Gesamtgewicht des Fahrzeuges (12, 12a bis 12c) ermittelt wird.
